# EUROPEAN PATENT APPLICATION

(11) **EP 4 292 563 A1**
(43) Date of publication of application: **20.12.2023**
(21) Application number: 23178485.1
(22) Date of filing: 09.06.2023
(51) Int. Cl.: A61C 9/00, A61C 19/04

(54) **DENTAL DETECTION APPARATUS FOR DETECTING THE ORIENTATION IN SPACE OF THE DENTAL ARCHES OF A PATIENT**

(30) Priority: 13.06.2022 IT 202200012389
(71) Applicant: Lastruttura S.p.A., 21012 Cassano Magnago (VA) (IT)
(72) Inventor: CAMPANA, Adriano, 21020 BRUNELLO VA (IT)
(74) Representative: Modiano, Micaela Nadia

(57) **Abstract**

A dental detection apparatus (1) for detecting the orientation in space of the dental arches of a patient, particularly of the upper arch, comprising a handle (50) which can be gripped by an operator and an intraoral detection plate (70) adapted to be at least partially covered with a fixing and stabilization material (9) for the stabilization of the dental arches with respect to the intraoral detection plate (70) and to be inserted in the mouth of the patient; the intraoral detection plate (70) is configured to be coupled in an articulated manner to the handle (50) by means of a joint (60) and a horizontality identification device (30) is furthermore provided which is or can be coupled rigidly to said handle (50).

## Description

The present invention relates to a dental detection apparatus for detecting the orientation in space of the dental arches of a patient, in particular of the upper arch.

The detections that can be made by means of the apparatus according to the present invention can be particularly useful both during preliminary analysis of the patient's status and as an aid in the provision of any type of prosthetic or orthodontic rehabilitation.

More specifically, but in a non-limiting way, the present invention is therefore particularly useful in the fields of orthodontics and orthognathodontics.

Dental detection apparatuses for detecting dental impressions are known which comprise an intraoral detection plate (commonly termed "fork" in the field) the shape and size of which are adapted toinsert it into the patient's mouth, covering entirely the upper and lower dental arches.

In practice, the plate or fork is usually covered on one or both faces with a blocking material, i.e., an occlusal registration material, and is then inserted into the oral cavity of the patient, who is asked to grip the fork between his/her teeth so that their impression is imprinted in the blocking material.

As is known, the blocking material, or occlusal registration material, is a material generally in the form of a paste or gel - or otherwise having a consistency adapted to the purpose - and is usually subject to subsequent hardening (known detection materials include so-called "jet bite," "blue mousse," 45° moyco wax, addition silicone).

As is known, nowadays the need is particularly felt in dentistry to also detect the position of the upper maxillary in space, i.e., of the upper dental arch in relation to the cranium, in particular with a cranio-axial reference.

In greater detail, in dental detections it is particularly important and useful to also detect the position of the upper arch with respect to the horizontal ground plane, and to do so, it is customary to detect the position of the upper arch relative to one of the known anthropometric planes that can be identified on the patient's cranium, such as the Frankfurt Plane or the Camper Plane, which by convention are considered parallel to the ground plane.

In the background art, to also determine the position of the upper maxillary in space, the detection plate described above is integrated into a more complex detection apparatus commonly referred to as "transfer facebow" .

Such transfer facebows vary in terms of constructive details, but they all share the fact that they have a rigid structure configured to be fixed to three specific craniofacial anatomical points (which may vary depending on the specific apparatus): an anterior anatomical point (nasion, porion) and two posterior or lateral points (external acoustic meatuses, hinge axis points, porion). Based on the fact that three points in space identify a plane, this structure can identify one of the conventional anthropometric planes.

The detection plate is articulately coupled to the rigid structure of the transfer facebow so that it can be inserted into the patient's oral cavity while the rigid structure is attached to the craniofacial anatomical points. In this way, while taking dental impressions it is also possible to record the position of the plate with respect to the rigid structure and thus, ultimately, the position of the dental arch relative to the anthropometric plane identified by the rigid structure itself.

The systems of the known type just described, while useful and widely used, have some limitations and disadvantages, among which it is possible to mention a sometimes unsatisfactory accuracy in identifying the true position of the dental arch with respect to the horizontal ground plane. In fact, as already mentioned, the anthropometric planes taken as reference are only conventionally parallel to the actual horizontal plane, since they are integral with the cranium and thus vary their orientation on the basis of the position assumed by the patient's head.

This limitation is particularly important in a context in which it is becoming increasingly evident, both from theory and from practice, that it is important to detect the position of the dental arches with respect to the true horizontal plane when the patient's head is in the physiological position in space (a position referenced in the international literature of reference as "Natural Head Position").

Moreover, in these apparatuses of the known type, even the detection of conventional anthropometric planes is not always completely accurate: such planes are referred to an ideal "dry" cranium (without soft tissues), while in practice the detection has to deal with anatomical elements that may alter its accuracy, such as the presence of facial soft tissues that are more or less thick, more or less imbibed in the underlying skin levels, the presence of possible skeletal anomalies that are difficult to detect, etc.

Another disadvantage of transfer facebows is that they are complex, difficult and laborious to use.

Disadvantageously, the detection process is long and uncomfortable for the patient.

Moreover, this type of apparatus is quite complex and expensive to provide.

The aim of the present invention is to provide a dental detection apparatus for detecting the orientation in space of the dental arches of a patient, which solves the technical problem described above, obviates the drawbacks and overcomes the limitations of the background art cited above by making it possible to detect the true position of the dental arch with respect to the horizontal ground plane.

Within this aim, an object of the present invention is to provide a dental detection apparatus that makes it possible to detect the position of the dental arch with respect to the ground plane faster and/or more easily and/or more accurately than the background art.

Another object of the invention is to provide a dental detection apparatus that makes it possible to detect the position of the dental arch with respect to the ground plane when the patient's head is in the physiological position in space ("Natural Head Position").

A further object of the invention is to provide a dental detection apparatus that is more comfortable for the patient than known apparatuses.

A further object of the invention is to provide a dental detection apparatus that is easy and inexpensive to provide and use.

This aim, as well as the objects mentioned and others that will become more apparent hereinafter, are achieved by a dental detection apparatus according to claim 1.

Further characteristics and advantages of the invention will become more apparent from the description of a preferred but not exclusive embodiment of a dental detection apparatus, illustrated by way of non-limiting example in the accompanying drawings, wherein:
Figure 1 is a perspective view of a dental detection apparatus according to the invention, in a released configuration;
Figure 2 is a perspective view of the detection apparatus of Figure 1, in the coupled operational configuration for use;
Figure 3 is a lateral elevation view of the detection apparatus of the previous figures, in the coupled operational configuration for use;

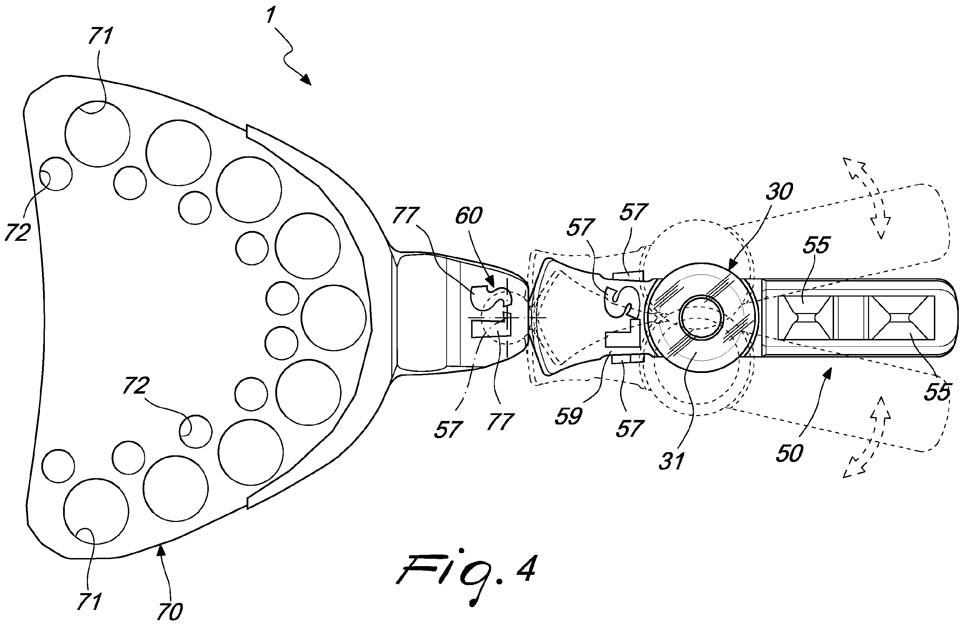

Figure 4 is a top plan view of the detection apparatus of the previous figures, in the coupled operational configuration for use;

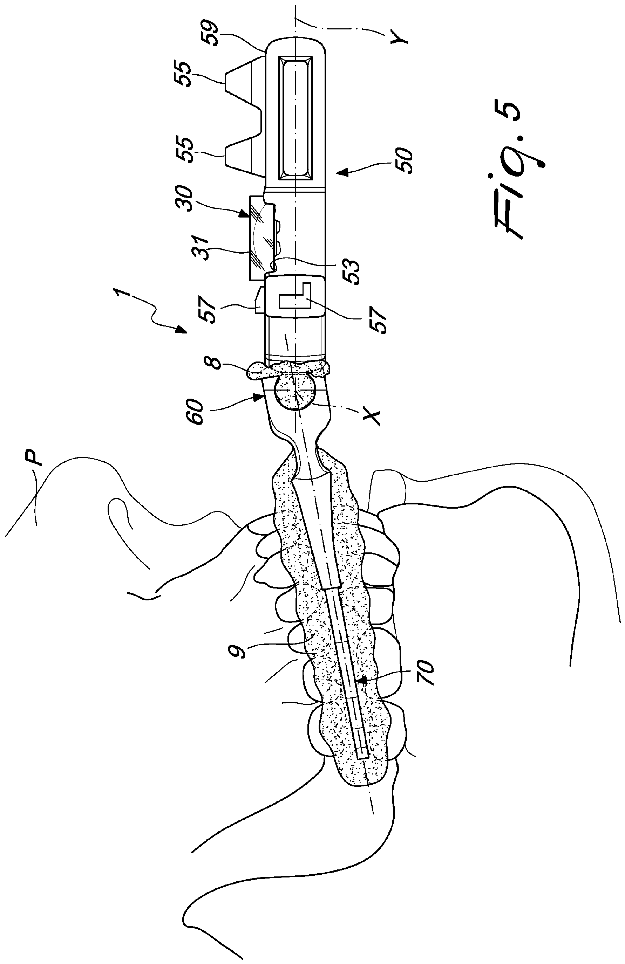

Figure 5 is a lateral view of the detection apparatus of the previous figures in a situation of use, with the detection plate inserted into the oral cavity of a patient (P), in the fixed coupled configuration.

With reference to the figures, the dental detection apparatus for taking dental impressions of a patient according to the invention, generally designated by the reference numeral 1, comprises a handle 50 that can be gripped by an operator and an intraoral detection plate 70 (or fork) adapted to be at least partially covered with a fixing and stabilization material 9 to lock the dental arches with respect to the plate and to be inserted in the mouth of the patient P.

The fixing and stabilization material 9 is, in other words, a locking material, and is intended to lock the arches with respect to each other so that they do not move with respect to the intraoral detection plate 70 (or fork).

The shape and dimensions of the handle 50 can vary according to the constructive choices; the handle 50 generally has a longitudinal extension, extending along a longitudinal axis Y.

The shape and dimensions of the intraoral detection plate 70 may also vary according to the requirements, being compatible with the function of being inserted in the mouth of the patient P and of being interposed between the two dental arches; in the preferred embodiments, said detection plate 70 has a substantially wedge-like or C-like plan shape, which substantially follows the physiological shape, in plan view, of a palate and of the dental arches.

Preferably, the intraoral detection plate 70 is provided with a plurality of through holes 71, 72 to facilitate the use, as a fixing and stabilization material 9, of a silicone such as for example one of the well-known "jet bite" or "blue mousse" silicones.

In the embodiment shown, there are two series of through holes 71, 72 arranged along the lateral profile of the plate 70: an outer one, in which the holes 71 have a larger diameter, and an inner one. in which the holes 72 have a smaller diameter.

More generally, the fixing and stabilization material 9 to which reference is made can be any occlusal registration material of a known type, for example in paste or gel form or a silicone.

According to the invention, the intraoral detection plate 70 is configured to be articulately coupled to the handle 50 by means of a joint 60, preferably in a removable manner.

Even more preferably, the plate 70 and the handle 50 are separate and independent of each other and can be coupled and uncoupled as needed, so that different plates 70 can be coupled to a same handle 50, so that during use it is possible to choose which plate 70 to couple to the handle 50 according to the requirements (for example, on the basis of the dimensions suitable for the patient).

Advantageously, the handle 50 and the intraoral detection plate 70, when coupled together, can be rigidly fixed by virtue of a fixing means 8 which acts on the joint 60; in this manner, during use, it is possible to first orient the handle 50 with respect to the plate 70 and then fix them to keep the achieved orientation fixed.

Such fixing means 8 is preferably a fluid fixing element, such as for example a resin; according to this solution, the joint 60 is configured to allow the application, in and/or on the joint 60 itself, of the fixing fluid, preferably a resin, that constitutes the fixing means 8.

In other words, in the solution described above the joint 60 is configured so that it can be locked with the application of a fluid, i.e., at least one interface surface between the components of the joint 60 is accessible for the application from the outside of a fluid while the handle 50 and the plate 70 are coupled.

According to an optimal solution, the fixing means 8 is a polymerizable composite resin, the fluidity of which prevents, once applied, movements of the plate 70 with respect to the handle 50.

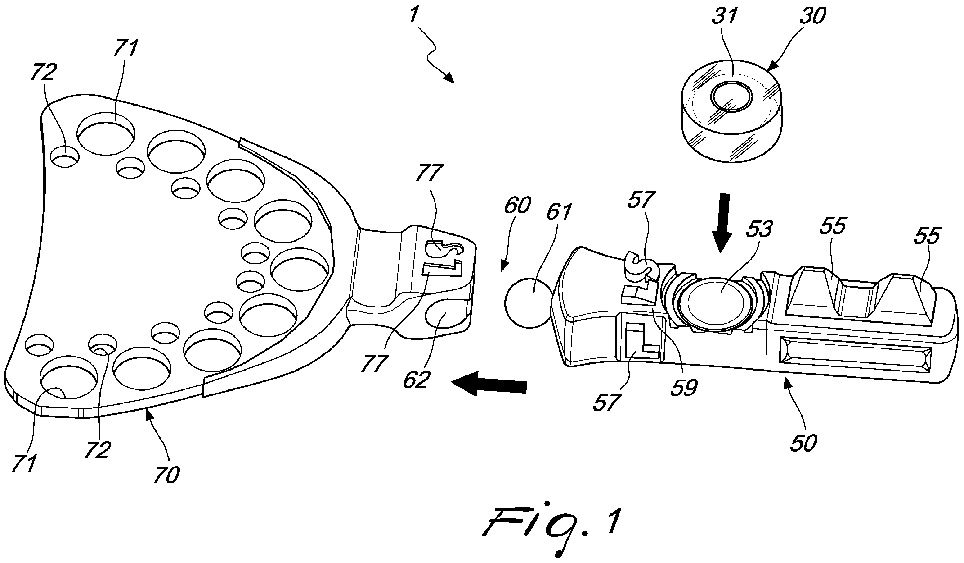

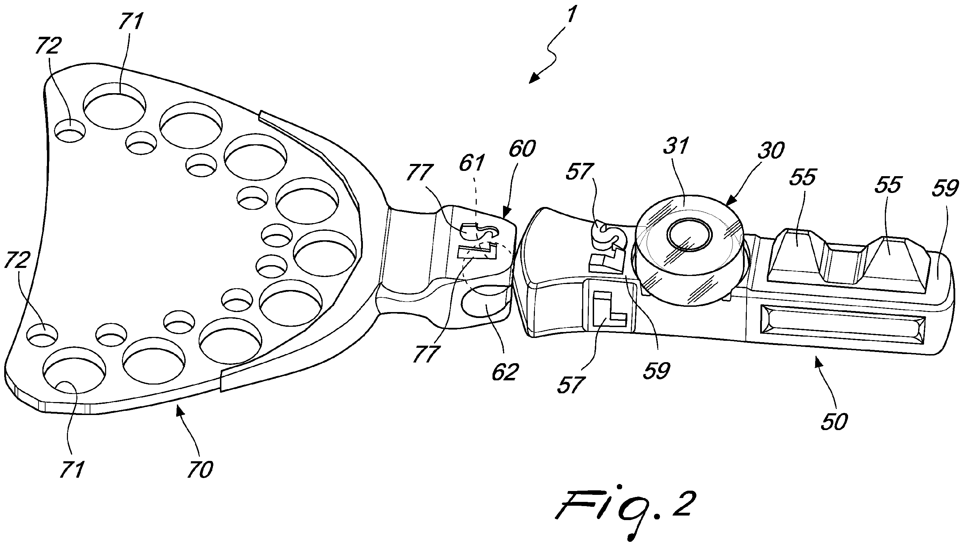

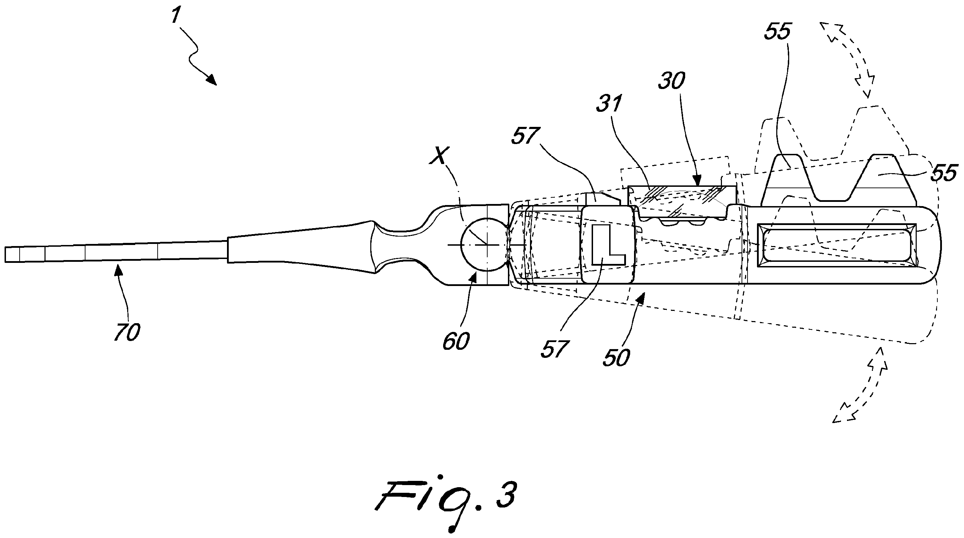

Essentially, therefore, in the preferred embodiments the dental detection apparatus 1 as a whole can be configured in at least three configurations:
- an uncoupled configuration (shown in Figure 1), in which the handle 50 and the intraoral detection plate 70 are uncoupled from each other;
- an operational coupled configuration for use (shown in Figures 1, 2 and 3), in which the plate 70 and the handle 50 are coupled by means of the joint 60 so that they are movable with respect to each other with at least one degree of freedom (rotation of the plate 70 about an axis of rotation X that is perpendicular with respect to the longitudinal axis Y along which the handle 50 is extended), preferably two degrees of freedom (rotation also about a third axis Z which is perpendicular to the other two axes Y and Z), and even more preferably three degrees of freedom (rotation also about the longitudinal axis Y);
- a fixed coupled configuration, in which the plate 70 and the handle 50 are rigidly coupled together by the action of the fixing means 8.

The joint 60 is preferably a ball joint.

In the preferred embodiments, including the one shown, the joint 60 comprises a ball 61 which is fixed to one end of the handle 50 and can be inserted in a complementary cavity 62 present at one end of the intraoral detection plate 70, or vice versa (ball on the plate 70 and cavity on the handle 50).

Preferably, the cavity 62 has a substantially C-shaped transverse cross-section and is open laterally to allow insertion of ball 61; even more preferably, the cavity 62 comprises a central groove that allows rotation of handle 50.

According to the invention, the detection apparatus 1 also comprises a horizontality identification device 30 that is or can be rigidly coupled to the handle 50. By virtue of this characteristic, during impression taking, when the plate 70 is between the teeth of the patient P it is possible to orient the handle 50 so as to position it horizontally (with the longitudinal axis Y perpendicular to the vertical gravity axis) and thus identify the position of the dental arches in space with respect to the actual horizontal plane, which corresponds to the orientation of the plate 70 with respect to the handle 50 oriented in a horizontal position; by making the patient P assume the natural head position, it is possible to detect the position of the dental arch with respect to the ground plane when the head of the patient P is in the physiological position in space ("Natural Head Position").

The horizontality identification device 30 can be any known device capable of allowing identification of the horizontal position, such as for example one of the devices known as level. Preferably, the horizontality identification device 30 comprises a spirit level.

In the preferred and illustrated embodiment, the horizontality identification device 30 comprises a container 31, which is preferably but not necessarily cylindrical and at least partially transparent and which contains a bubble which is free to move in a fluid, in which a reference mark identifies the position that the bubble assumes when the device 30 (and thus the handle 50 coupled thereto) is positioned horizontally.

According to an optional and advantageous characteristic, the horizontality identification device 30 can be removably coupled to the handle 50, for example by being interlockingly insertable in a receptacle 53 provided on the handle 50 or by virtue of other means for releasable fixing. This makes it possible to reuse a same device 30 several times with different handles 50.

One of the possible solutions to provide the removable fixing of the horizontality identification device 30 to the handle 50 is shown and provides for the presence, on the handle, of a receptacle 53 configured to removably accommodate the horizontality identification device 30.

Preferably, in order to allow easy alignment of the handle 50 with the face of the patient P, the handle 50 comprises at least one, and preferably two, alignment protrusions 55 adapted to allow the operator to align the handle 50 with the patient's nose, like a sight.

These protrusions 55 protrude vertically from an upper face 59 of the handle 50, which is preferably the same face 59 on which the horizontality identification device 30 can be fixed.

In the preferred embodiments there are two alignment protrusions 55, which are aligned longitudinally and separated by a space.

Preferably, the alignment protrusions 55 are pyramid- or wedgeshaped or in any case taper upward.

Conveniently, the alignment protrusions 55 have a rectilinear upper edge, which is aligned parallel to the longitudinal Y axis and in the preferred embodiments corresponds to the upper vertex of the pyramid or wedge.

According to another optional and advantageous characteristic, the handle 50 comprises one or more symbols in relief 57 (for example, letters or numbers) adapted to be detected by an optical detection device (for example a digital scanner). In the example shown, the symbols in relief 57 comprise letters. These symbols in relief 57 are conveniently placed at least on the upper face 59 and are preferably positioned on a proximal portion of the handle 50 that is adjacent to the joint 60. Optionally, symbols in relief 57 are also present on the lateral faces of the handle 50 (again in the proximal portion), as in the example shown, in which there are two letters on the upper face and there is one letter on each of the two lateral faces. These symbols in relief 57 are intended to facilitate the alignment of digital scans.

Optionally, scanner-detectable symbols 77, for example engraved letters or numbers, are present also on the detection plate 70, preferably at the cavity 62.

In the preferred embodiment, three portions can be identified in the handle 50: a proximal portion (which is adjacent to the joint 60), in which symbols in relief 57 are present; a distal portion (at the opposite end with respect to the proximal portion), on which the protrusions 55 are present; and an intermediate portion, on which the horizontality detection device 30 is or can be fixed.

The detection apparatus 1 described above makes it possible to perform a method of dental impression taking that comprises the following steps:
- preparing the dental detection apparatus 1 in the operational configuration for use;
- covering the intraoral detection plate 70 with a fixing and stabilization material 9;
- inserting the intraoral detection plate 70 in the patient's oral cavity and taking impressions of the teeth, by imprinting them in the fixing and stabilization material 9;
- while the intraoral detection plate 70 is locked inside the oral cavity, orienting the handle 50 in a horizontal position (with the aid of the horizontality identification device 30) and preferably aligning the handle 50 with the patient's nose (with the aid of the alignment protrusions 55);
- applying a fixing means to the joint 60 so as to provide the fixed coupled configuration;
- performing a scan of at least part of the dental detection apparatus 1 which comprises at least the intraoral detection plate 70 covered with the fixing and stabilization material 9, so as to obtain a model of the dental arches.

During the detection it is possible to have the patient assume the natural physiological position of the head.

A preferred method for using the detection apparatus 1 is described in greater detail below by a sequence of steps.
A) Patient sitting at 90 degrees with arms resting on his lap, positioned in front of a mirror of size 25x25 cm, at a distance of approximately 1.5 m (the patient is instructed to fix his gaze on his eyes reflected in the mirror). This distance is ideal for keeping the viewed image in the center of the fovea (retina), without triggering compensatory movements (Vestibulo-Ocular Reflex).
B) Wait for the patient to stabilize.
C) Attach the plate 70 to the handle 50 and insert it like a fork into the oral cavity. The plate 70 is to be filled with an occlusal registration material and adapts to the maxillary arch, inviting the patient to close his dental arches in habitual occlusion.
D) Once the material has compacted, the detection plate 70 is taken out of the oral cavity and the accuracy of the bite impression and its stability are checked by reinserting it into the mouth.
E) Excessive volumes of material present in the vestibular and medial side of plate 70 are conveniently trimmed to avoid or minimize any exteroceptive stimuli due to contact with the cheeks and tongue.
F) The patient, sitting in the Natural Head Position, is invited to look at the image of his face in the mirror, in particular his/her eyes. This activates the reflexes that tend to keep the head correctly and functionally oriented in space (VOR and VCR), according to the principles by which the "Balance System" regulates the position of the whole body in space.
G) The patient is asked to close his/her eyes and swallow while maintaining the position assumed. The elimination of visual control prevents the subject from observing the maneuvers performed by the operator at a short distance from his eyes, avoiding activation of vergence reflexes that might affect the spatial position of the head. In this way, only the vestibular response is activated, and it is in this position that the spatial position of the handle 50 relative to the plate 70 is macroscopically adjusted.
H) The operator adjusts the handle 50 by orienting it in space until the horizontality identification device indicates the horizontal position. In this way, the handle 50 is parallel to the horizontal plane (ground plane), with the patient's head functionally positioned in space. It is also useful that the "sight" (i.e., the protrusions 55) is aligned with the patient's nose so that not only the spatial orientation of the upper maxillary in space is detected but also its position relative to the midline and the patient's nose.
I) As a check of the sequence, for verification/confirmation/validation of the registered position, the patient is asked to open his/her eyes again, observing whether small adjustments of the head position, identifiable with small adjustments of the correct position of the bubble of the level 30, appear. If necessary, the position is corrected with the patient being asked to maintain the view of himself/herself in the mirror.
L) At this point, the position of the handle 50 is fixed by locking the joint 60, for example by using a resin.
M) The plate 70 locked to the horizontal handle 50 is repositioned in the oral cavity, inviting the patient to hold it firmly between the maxillary and mandibular arches.

At this point, the clinician can proceed with data detection by performing a digital scan. For example, it is possible to perform an intraoral scan of the patient's arches and also a scan of the detection device 1, complete with the handle 50 and the detection plate 70 on which the fixing and stabilization material 9 is present. By digitally combining these data, it is possible to obtain a virtual model of the patient's dental arches which also comprises the orientation of said arches in space (in particular with respect to the ground plane).

Advantageously, by digitally scanning the apparatus 1 up to at least the symbols in relief it is possible to align the digital scans accurately.

The results of the detection can be used both during preliminary analysis of the patient's status and as an aid in the provision of any type of rehabilitation, whether prosthetic or orthodontic. For example, it is possible to provide products such as "Snap On Smiles" (interlocking structures that allow aesthetic-functional pre-evaluation), direct mockup overlays, or prefiling temporaries.

In practice it has been found that the dental detection apparatus according to the present invention achieves the intended aim and objects, since it makes it possible to identify the true position of the dental arch with respect to the horizontal ground plane.

Another advantage of the dental detection apparatus according to the invention is that it makes it possible to detect the position of the dental arch with respect to the ground plane quickly, easily and more accurately than the background art.

An additional advantage of the dental detection apparatus according to the invention is that it is more comfortable for the patient during use.

Another advantage of the dental detection apparatus according to the invention is that it is easy and inexpensive to provide and use.

The dental detection apparatus thus conceived is susceptible of numerous modifications and variations, all of which are within the scope of the accompanying claims.

All the details may furthermore be replaced with other technically equivalent elements.

The disclosures in Italian Patent Application no. 102022000012389, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A dental detection apparatus (1) for detecting the orientation in space of the dental arches of a patient, particularly of the upper arch, comprising a handle (50) which can be gripped by an operator and an intraoral detection plate (70) adapted to be at least partially covered with a fixing and stabilization material (9) for the stabilization of the dental arches with respect to the intraoral detection plate (70) and to be inserted in the mouth of the patient,
**characterized in that** said intraoral detection plate (70) is configured to be coupled in an articulated manner to said handle (50) by means of a joint (60)
and **in that** it comprises a horizontality identification device (30) which is configured to be coupled rigidly to said handle (50).

2. The dental detection apparatus (1) according to claim 1, wherein said handle (50) and said intraoral detection plate (70), when mutually coupled, can be fixed rigidly by virtue of a fixing means (8) which acts on said joint (60).

3. The dental detection apparatus (1) according to claim 1 or 2, wherein said handle (50) comprises at least one alignment protrusion (55) which is adapted to allow the operator to align the handle (50) with the nose of the patient.

4. The dental detection apparatus (1) according to one or more of the preceding claims, wherein said handle (50) comprises one or more symbols in relief (57) which are adapted to be detected by an optical detection device.

5. The dental detection apparatus (1) according to one or more of the preceding claims, wherein said horizontality identification device (30) comprises a spirit level.

6. The dental detection apparatus (1) according to one or more of the preceding claims, wherein said handle (50) comprises a receptacle (53) configured to accommodate removably said horizontality identification device (30).

7. The dental detection apparatus (1) according to one or more of the preceding claims, wherein said joint (60) comprises a ball (61) which is fixed to one end of said handle (50) and can be inserted in a complementary cavity (62) that is present at one end of said intraoral detection plate (70), or vice versa.

8. The dental detection apparatus (1) according to claim 2, wherein said joint (60) is configured to allow the application, in and/or on the joint (60), of a fixing fluid, preferably a resin, which constitutes said fixing means (8).

9. The dental detection apparatus (1) according to claim 2, **characterized in that** it can be configured at least in:
- a disengaged configuration, in which the handle (50) and the intraoral detection plate (70) are mutually disengaged;
- an active coupled configuration for use, in which the intraoral detection plate (70) and the handle (50) are coupled by means of said joint (60) so that they can move with respect to each other with at least one degree of freedom, the intraoral detection plate (70) being able to rotate about a rotation axis which is perpendicular to a longitudinal axis (Y) along which the handle (50) is extended;
- a fixed coupled configuration, in which the intraoral detection plate (70) and the handle (50) are mutually rigidly coupled by virtue of the action of said fixing means (8).

10. A method for obtaining a model of the dental arches of a patient provided by means of a dental detection apparatus (1) according to one or more of the preceding claims, comprising the steps of:
a. preparing said dental detection apparatus (1) in said active configuration for use;
b. covering at least partly the intraoral detection plate (70) with a fixing and stabilization material (9);
c. inserting the intraoral detection plate (70) in the oral cavity of the patient and making the teeth imprint in the fixing and stabilization material (9);
d. while the intraoral detection plate (70) is locked within the oral cavity, orienting the handle (50) in a horizontal position;
e. applying a fixing means (8) to the joint (60) so as to provide said fixed coupled configuration;
f. performing at least one scan of at least part of said dental detection apparatus (1) which comprises at least the intraoral detection plate (70) covered with the detection material (9).
